# EUROPEAN PATENT APPLICATION

(11) **EP 4 637 007 A1**
(43) Date of publication of application: **22.10.2025**
(21) Application number: 25168908.9
(22) Date of filing: 07.04.2025
(51) Int. Cl.: H02K 41/02, B60K 1/02, H02K 1/30, H02K 1/2795

(54) **ADAPTABLE ELECTRIC MOTOR FOR BATTERY ELECTRIC VEHICLES (BEVS)**

(30) Priority: 12.04.2024 US 202418634548
(71) Applicant: Volvo Car Corporation, 405 31 Göteborg (SE)
(72) Inventor: Orbay, Raik, SE-405 31 Göteborg (SE)
(74) Representative: Nederlandsch Octrooibureau

(57) **Abstract**

An electric motor can comprise a stator unit comprising a plurality of concentrated or distributed winding elements coupled together as a chain. The electric motor can further comprise a rotor unit comprising one or more shuttles coupled to the plurality of concentrated or distributed winding elements in an arrangement that can impart to the electric motor, a shape that can circumvent a cabin of an electric vehicle comprising the electric motor.

## Description

### TECHNICAL FIELD

The subject disclosure relates to electric vehicle technology and, more specifically, to adaptable electric motors for BEVs.

### BACKGROUND

For vehicles, a large cabin volume is considered a signature of premium quality. Electric vehicles allow for spacious cabins due to electric motors being relatively more compact than internal combustion engines (ICEs). However, electric motors and other propulsion elements in an electric vehicle are often large and intrude into the cabin volume of an electric vehicle. For example, in addition to an electric motor, an electric vehicle can comprise a battery, electronics and an inverter, which can be very large components. Additionally, the presence of a rotor and a gearbox can add to an overall height of components underneath the cabin of the electric vehicle, resulting in a relatively tall electric vehicle. The intrusive propulsion elements can compromise the overall comfort of occupants of the electric vehicle. Moreover, a taller electric vehicle can be aerodynamically inefficient. Thus, a propulsion solution that can increase performance efficiency and cabin volume in an electric vehicle can be desirable.

### SUMMARY

The following presents a summary to provide a basic understanding of one or more embodiments described herein. This summary is not intended to identify key or critical elements, delineate scope of particular embodiments or scope of claims. Its sole purpose is to present concepts in a simplified form as a prelude to the more detailed description that is presented later. In one or more embodiments described herein, systems, methods, and/or devices that can enable adaptable electric motors for BEVs are discussed.

According to an embodiment, an electric motor is provided. The electric motor can comprise a stator unit comprising a plurality of winding elements coupled together as a chain. The electric motor can further comprise a rotor unit comprising one or more shuttles coupled to the plurality of winding elements in an arrangement that can impart to the electric motor, a shape that can circumvent a cabin of an electric vehicle comprising the electric motor.

According to another embodiment, a method is provided. The method can comprise coupling a plurality of winding elements together as a chain in a stator unit of an electric motor. The method can further comprise coupling one or more shuttles in a rotor unit to the plurality of winding elements in an arrangement that can impart to the electric motor, a shape that can circumvent a cabin of an electric vehicle comprising the electric motor.

According to yet another embodiment, an electric vehicle is provided. The electric vehicle can comprise at least one electric motor. The at least one electric motor can comprise a stator unit comprising a plurality of winding elements coupled together as a chain. The at least one electric motor can further comprise a rotor unit comprising one or more shuttles coupled to the plurality of winding elements in an arrangement that can impart to the at least one electric motor, a shape that can circumvent a cabin of the electric vehicle.

### BRIEF DESCRIPTION OF THE DRAWINGS

One or more embodiments are described below in the Detailed Description section with reference to the following drawings:
FIG. 1 illustrates a block diagram of an example, non-limiting system comprising an electric motor that can be modified to adjust a cabin volume inside an electric vehicle in accordance with one or more embodiments described herein.
FIG. 2 illustrates block diagrams of example, non-limiting electric motor topologies in an electric vehicle in accordance with one or more embodiments described herein.
FIG. 3 illustrates a diagram of an example, non-limiting electric motor that can circumvent a cabin of an electric vehicle in accordance with one or more embodiments described herein.
FIG. 4 illustrates diagrams of example, non-limiting sections of an adaptable electric motor that can circumvent a cabin of an electric vehicle in accordance with one or more embodiments described herein.
FIG. 5 illustrates a diagram of an example, non-limiting placement of concentrated winding elements in an electric motor in accordance with one or more embodiments described herein.
FIG. 6 illustrates diagrams of example, non-limiting views of shuttles comprised in an adaptable electric motor in accordance with one or more embodiments described herein.
FIG. 7 illustrates a diagram of an example, non-limiting system comprising a truss system coupling an electric motor to a tire via a gearbox in accordance with one or more embodiments described herein.
FIG. 8 illustrates a diagram of an example, non-limiting system comprising a truss system directly coupling an electric motor to a tire in accordance with one or more embodiments described herein.
FIG. 9 illustrates diagrams of example, non-limiting topologies of an electric motor that can result in different cabin volumes inside an electric vehicle in accordance with one or more embodiments described herein.
FIG. 10 illustrates example, non-limiting diagrams showing different topologies of an electric motor in accordance with one or more embodiments described herein.
FIG. 11 further illustrates example, non-limiting diagrams showing different topologies of an electric motor with reference to an electric vehicle in accordance with one or more embodiments described herein.
FIG. 12 illustrates example, non-limiting diagrams showing how different topologies of an electric motor can be utilized for a larger cabin volume in an electric vehicle in accordance with one or more embodiments described herein.
FIG. 13 illustrates an example, non-limiting cab-forward design for an electric vehicle in accordance with one or more embodiments described herein.
FIG. 14 illustrates a flow diagram of an example, non-limiting method to develop an adaptable electric motor in accordance with one or more embodiments described herein.
FIG. 15 illustrates a flow diagram of another example, non-limiting method to develop an adaptable electric motor in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

For vehicles, a large cabin volume is considered a signature of premium quality. Electric vehicles allow for spacious cabins because electric motors are relatively more compact than ICEs. However, electric motors and other propulsion elements in an electric vehicle are often large and intrude into the cabin volume of an electric vehicle. For example, in addition to an electric motor, an electric vehicle can comprise a battery, electronics and an inverter, which can be large components. Additionally, the presence of a rotor and a gearbox can add to an overall height of components underneath the cabin, resulting in a relatively tall electric vehicle. The intrusive propulsion elements can compromise the overall comfort of occupants of the electric vehicle and a taller electric vehicle can be aerodynamically inefficient. For example, in the near future, an entity (e.g., hardware, software, AI, neural network and/or user) operating an electric car can choose to operate the electric car in an autonomous mode while lounging and enjoying music, lighting, scenic beauty, pleasant smells, etc. To facilitate such an experience, the cabin surface of the electric car can need insulation to maintain a certain temperature, ambience, sound, etc. Introducing such a cocoon around passengers inside the electric car can be expensive and any intrusion to the experience can reduce the luxury available to the occupants. For example, packing one or more electric motors at the back of the electric car, underneath the cabin area, can cause a significant amount of cabin volume to be dedicated to the propulsion elements for the electric vehicle.

Usually, electric motors are placed between the tires of the electric vehicle, on an axle. For example, in a back wheel drive electric car, an electric motor and an aggregate of components including the inverter and electronics to charge the electric car can be placed as a package between the two rear tires of the electric car. A similar configuration is also implemented at the front of the electric car, resulting in much of the machinery being located between the tires underneath the seat at the back of the electric car and in the trunk at the front of the electric car. The package comprising the electric motor and the aggregate is usually placed in the vicinity of the axle in an electric car because placing the package elsewhere can introduce efficiency issues for the electric vehicle. For example, placing an electric motor and inverter at separate locations as opposed to placing them at one location as a single package can introduce risks for electromagnetic compatibility issues, cable resistance, etc. Losses resulting from placing the electric motor and other propulsion elements at a distance from one another can become immediately apparent in the range of the electric car. Thus, electric vehicles usually include a tall package (i.e., extending towards the roof of the electric vehicle) of propulsion elements packed underneath the cabin. A hub motor, wherein an electric motor, a corresponding propulsion package and a braking system related to the package can be located inside the wheelhouses of the electric vehicle, is not an efficient solution to the problems described above. In some existing electric vehicle technologies, electric motors can share the same shaft along the lateral direction of the electric vehicle such that two electric motors can be placed back-to-back on the same shaft. However, such solutions also intrude in the cabin volumes of electric vehicles, thereby reducing the customer experience and overall vehicle efficiency. Thus, a propulsion solution that can increase performance efficiency and cabin volume in an electric vehicle while supporting commercially feasible design solutions for electric vehicles can be desirable.

Various embodiments of the present disclosure can be implemented to produce a solution to one or more of the problems described above. Embodiments described herein include systems and methods that can enable adaptable electric motors as propulsion solutions for BEVs. In various embodiments herein, an electric motor can be designed to be adaptable in size and shape. For example, in various embodiments, an electric motor can comprise a stator unit comprising a plurality of winding elements coupled together as a chain. The electric motor can further comprise a rotor unit comprising one or more shuttles coupled to the plurality of winding elements in an arrangement that can impart to the electric motor a shape that can circumvent a cabin of an electric vehicle comprising the electric motor. That is, the winding elements coupled in a chain structure and constituting the stator unit of the electric motor, and the shuttles coupled to the winding elements and constituting the rotor unit of the electric motor, can allow the electric motor to have a shape that does not intrude in the cabin volume of the electric vehicle. In some embodiments, the winding elements can be concentrated winding elements. In other embodiments, the elements can be distributed winding elements.

In various embodiments, the one or more shuttles can be magnetically coupled to the plurality of winding elements and mechanically coupled to a rail system in the stator unit. The plurality of concentrated or distributed winding elements can generate a magnetic field in the electric motor and the one or more shuttles can be coupled to the magnetic field through a flux linkage with permanent magnet(s) in the shuttle or via magnetic reluctance. Since the magnetic field signal is a sinusoidal wave, the one or more shuttles can follow the contours of the stator unit via the flux linkage, which can generate torque. The rail system can ensure that the one or more shuttles can be magnetically turned around the rail system in the desired direction to generate torque. In various embodiments, the one or more shuttles can be selected from a group consisting of permanent magnet-based shuttles, induction-based shuttles, or reluctance-based shuttles, and a number of shuttles in the rotor unit can be increased to increase torque generated by the electric motor. Additionally, increasing a number of the concentrated or distributed winding elements can generate one or more different morphologies of the electric motor, for example, by increasing the circumference of the electric motor.

In various embodiments, the electric motor can be coupled to a truss system via link arms, and the truss system can be coupled to a gearbox. The gearbox can be further coupled to a tire of the electric vehicle. The torque generated by the electric motor can be transmitted to the tire via the truss system and the gearbox. In an embodiment, the truss system can directly connect the electric motor to the tire. In various embodiments, the size and shape of the stator unit and therefore, the electric motor, can be morphed to adjust the cabin volume inside the electric vehicle during operation of the electric vehicle. For example, the shuttles inside the rotor unit can be rearranged via controls accessible to an entity (e.g., hardware, software, AI, neural network and/or user) operating the electric vehicle to create a more compact positioning of the shuttles, which can reduce an existing size of the stator unit and the electric motor. Doing so can release additional cabin volume that can be dedicated to increasing room for passengers or for storage in the hatch or trunk of the electric vehicle. In this regard, the truss system can also be designed to accommodate such repositioning of shuttles during operation of the electric vehicle. In various embodiments, the electric motor can be employed alone or in combination with additional adaptable electric motors in an electric vehicle. For example, low-end electric vehicles and/or electric vehicles having low propulsion needs can comprise only one electric motor, whereas heavy duty electric vehicles can comprise multiple electric motors. For example, an electric car can comprise one electric motor at the front and one electric motor at the back, on axles. As discussed above, the number of shuttles in the electric motor can also be increased or decreased based on propulsion needs of the electric vehicle. In some embodiments, hybrid solutions comprising a combination of conventional electric motors and the electric motor proposed herein can also be implemented.

### CAB-FORWARD:

Embodiments described herein can offer a cab-forward design solution for electric vehicles. Cab-forward implies that instead of designing a vehicle for the motors to be in-line with one another, the vehicle can be designed for the motors to be placed transversally such that hotter components can be put towards the radiator or the inlet of the vehicle. Doing so can result in a larger cab or cabin of the vehicle and a shorter front. An overall short front of the vehicle can provide an aerodynamic advantage, as well. For example, the tires of the vehicle can be closer to the vehicle's bumper, which can provide aerodynamic advantages, and the lateral distance between tires can be large enough to provide a luxurious lounging experience for occupants of the vehicle, even in smaller cars, for example.

Although the cab-forward technology is well explored for ICEs, cab-forward solutions for BEVs are limited to cylindrical designs for motor casings that are inflexible. For example, historically, ICEs were prominently employed to propel vehicles, but ICEs being large in size, consumed a lot of real estate inside a vehicle. Additionally, the usage of ICEs resulted in very warm components being placed towards the side of the occupants. A firewall was employed to separate the engine compartment from the passengers to prevent heat, fumes and other emissions from reaching the passengers. However, to maintain the center of gravity of the car at a desired location, such components were placed at locations that reduced the cabin volume. A cab-forward solution to this problem involved packing a motor transversally in the front, which allowed the hot portion of the package to be moved away from the cabin. As a result, the shape of the cabin could be modified to be more spacious and open and relatively less tall in height.

However, existing technologies for compact packaging of electric motors into BEVs involve increased current density, increased frequency, expensive materials, permanent magnets, rare-earth elements, etc. that can often be inefficient from a sustainability, vehicle performance and cost perspective. In this regard, embodiments of the present disclosure can present efficient solutions that can allow compact electric machines and assist to further increase the size of a cabin at the front and the back of the vehicle. In general, embodiments of the present disclosure can provide a flexible motor design for a flexible BEV design, such that a BEV cabin can be designed to be substantially larger for a given vehicle segment. Embodiments described herein can aim to provide an electric motor with bandwidth that can be aligned with customer needs. For example, the electric motor presented in various embodiments herein can be implemented for propulsion flexibility and flexibility in terms of cabin volumes in electric vehicles. For example, by employing the electric motor in an electric vehicle, the cabin space of the electric vehicle can be altered via a button. In some embodiments, the cabin space can be shaped differently for different locations of the electric vehicle (e.g., at four corners of the electric vehicle or per the height of the electric vehicle). In various embodiments, the electric motor can also allow for the clearance underneath the electric vehicle to be adjustable as desired by an entity operating the electric vehicle (e.g., vehicle owners, vehicle operators, etc.). In various embodiments, the flexible topology of the electric motor presented herein can also allow the electric motor to be implemented in an electric vehicle as an on-demand accessory, such that the electric motor can be retrofitted in the electric vehicle, and an entity operating the electric vehicle can press a button during operation of the electric vehicle to adjust the shape of the electric motor and modify the cabin volume.

The embodiments depicted in one or more figures described herein are for illustration only, and as such, the architecture of embodiments is not limited to the systems, devices and/or components depicted therein, nor to any particular order, connection and/or coupling of systems, devices and/or components depicted therein. In the figures presented herein, the Cartesian coordinate system has been referenced to indicate different views of the electric motor with respect to a vehicle such that the X axis extends from the front of the vehicle to the back, the Y axis extends laterally from mirror to mirror, and the Z axis extends towards the roof of the vehicle.

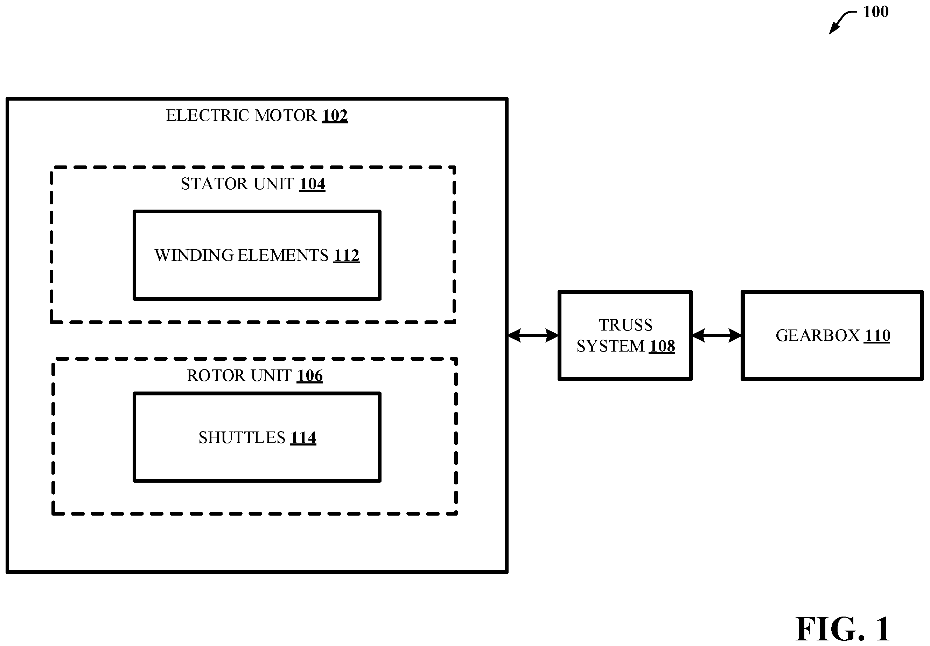

FIG. 1 illustrates a block diagram of an example, non-limiting system 100 comprising an electric motor that can be modified to adjust a cabin volume inside an electric vehicle in accordance with one or more embodiments described herein.

Non-limiting system 100 and/or the components of non-limiting system 100 can be employed to solve problems that are highly technical in nature (e.g., related to BEVs, electric motors, propulsion of electric vehicles, etc.), that are not abstract and that cannot be performed as a set of mental acts by a human. Non-limiting system 100 and/or components of non-limiting system 100 can be employed to solve new problems that arise through advancements in technologies mentioned above and/or the like. Non-limiting system 100 can provide technical improvements to electric vehicle technologies by improving aerodynamic efficiency and performance of an electric vehicle, reducing a weight of propulsion elements in an electric vehicle, increasing a cabin volume of an electric vehicle, increasing cooling efficiency of the electric vehicle and increasing efficiency of core material usage in the electric motor.

In some embodiments, concentrated winding elements can be employed in the stator unit of the electric motor proposed herein. Employing concentrated winding elements can reduce the number of end windings, which can lead to more efficient cooling and more efficient usage of core material. In other embodiments, distributed winding elements can be employed in the stator unit of the electric motor. Employing distributed windings can allow for less noise, vibration and harshness (NVH) in the electric motor and a better wave form. Core material refers to the amount of material in the rotor unit, that is, in the one or more shuttles that can constitute the rotor unit of the electric motor. A permanent magnet-based shuttle can include a soft magnet in the form of an iron core and a permanent magnet that can assist the shuttle to magnetically couple to the concentrated winding elements or the distributed winding elements. An induction-based shuttle can include a soft magnet in the form of a magnetic material with high permeability that can be magnetized and demagnetized depending on rotor positions. The design of the electric motor can prevent the need for a massive yoke in the stator unit. The concentrated winding elements can also be a lighter solution because less yoke or soft magnet material is needed inside the electric motor as compared to a traditional electric motor. Additionally, an electric motor with one shuttle can include less material than an electric motor with six shuttles, and the number of shuttles can be increased or decreased based on propulsion requirements of an electric vehicle. The various embodiments herein can also be designed as serviceable components, such that the electric motor can be retrofitted in an electric vehicle with additional shuttle elements, for example, at vehicle service centers based on the request of an entity/vehicle owner/vehicle operator (e.g., hardware, software, AI, neural network, machine and/or user) owning the electric vehicle, to upgrade the electric vehicle in terms of power and performance. Alternately, the entity/vehicle owner/vehicle operator can prioritize economy over power, in which case the number of default rotor shuttle elements in a cab-forward BEV can be reduced, for example, at service centers.

The electric motor can also be easier to manufacture with concentrated winding elements. Further, the concentrated winding elements can enable redundancy in the electric motor. For example, the electric motor can continue to operate and generate torque in case of a partial loss of windings. For example, in case of an insulation fault, one of the concentrated winding elements can heat up, resulting in some losses. However, due to the concentrated winding elements being separate (e.g., individual ones of the concentrated winding elements can be individual coils), the loss of one winding can prevent the loss of the entire electric motor.

Non-limiting system 100 can be a propulsion system inside an electric vehicle. Non-limiting system 100 can comprise electric motor 102, truss system 108 and gearbox 110. Electric motor 102 can comprise stator unit 104 and rotor unit 106. Stator unit 104 can comprise winding elements 112 and rotor unit 106 can comprise shuttles 114. In some embodiments, winding elements 112 can be concentrated winding elements. In other embodiments, winding elements 112 can be distributed winding elements. In various embodiments, stator unit 104 can comprise a plurality of winding elements 112 coupled together as a chain and rotor unit 106 can comprise one or more shuttles 114 coupled to the plurality of winding elements 112 in an arrangement that can impart to electric motor 102, a shape that can circumvent a cabin of the electric vehicle. In other words, the plurality of winding elements 112 can constitute stator unit 104, and the one or more shuttles 114 can constitute rotor unit 106. The plurality of winding elements 112 coupled in a chain structure and the one or more shuttles 114 coupled to the plurality of winding elements 112 can allow electric motor 102 to have a shape that can circumvent the cabin of the electric vehicle.

In various embodiments, the one or more shuttles 114 can be magnetically coupled to the plurality of winding elements 112 and mechanically coupled to a rail structure (not illustrated) on stator unit 104. For example, each element of the plurality of winding elements 112 can be a coil and each shuttle of the one or more shuttles 114 can comprise magnetic material. The plurality of winding elements (i.e., stator chain elements) can create a magnetic flux in the vicinity of shuttles 114, which can allow shuttles 114 to be magnetically coupled to each other. In various embodiments, shuttles 114 can be magnetically or mechanically coupled to each other (i.e., to neighboring shuttles 114), while being positioned on rails attached to /the plurality of winding elements 112 of stator unit 204. That is, neighboring shuttles 114 (i.e., two shuttle elements) can be coupled to each other via magnetic and/or mechanical junction elements. As stated earlier, the plurality of winding elements 112 can generate a magnetic field in electric motor 102, and the one or more shuttles 114 can be coupled via flux linkage to the magnetic field. Since the magnetic field wave is a sinusoidal signal, the one or more shuttles 114 can follow the contours of stator unit 104 via the flux linkage to create torque. In induction-based solutions, the magnetic field can be created by induced excitation, wherein the plurality of winding elements 112 inside stator unit 104 can create an induced field that can in turn create the magnetic field. Reluctance-based solutions can involve a reluctance to the magnetic field such that torque can be generated through magnetic reluctance. In permanent magnet-based solutions, one set of north and south poles created inside the electric motor can be connected to the north and south poles of stator unit 104. The rail structure can ensure that the one or more shuttles 114 can be magnetically turned around on the rail structure in the desired direction to generate torque. That is, the rail structure can limit the one or more shuttles 114 from moving in the Z direction (i.e., along an axis perpendicular to the ground). In various embodiments, the one or more shuttles 114 can be employed as propulsion elements for the electric vehicle and increasing a number of shuttles 114 in rotor unit 106 can increase torque generated by electric motor 102. In some embodiments, shuttles 114 can be serviceable and retrofittable components such that the number of shuttles 114 in rotor unit 106 can be altered. In various embodiments, the one or more shuttles 114 can be selected from a group consisting of permanent magnet-based shuttles, induction-based shuttles, or reluctance-based shuttles. In an embodiment, a shuttle can be like a squirrel cage where the flux can be rated. Further, in various embodiments, electric motor 102 can be selected from a group consisting of a permanent magnet motor, an induction motor or a reluctance-based motor.

In various embodiments, truss system 108 can connect the one or more shuttles 114 to a wheel (i.e., tire) of the electric vehicle, directly or via gearbox 110, to drive the wheel. In an embodiment, the one or more shuttles 114 can be connected to respective link arms of truss system 108. In another embodiment, a plurality of shuttles 114 can be connected to one or more link arms of truss system 108. For example, truss system 108 can connect the plurality of shuttles 114 to the wheel, wherein a first number of shuttles of the plurality of shuttles 114 can be respectively connected to one or more link arms of truss system 108, such that individual shuttles 114 of the plurality of shuttles 114 can push or pull one another, via mechanical force or magnetic force, without a second number of shuttles of the plurality of shuttles 114 being connected to truss system 108. Stated differently, the first number of shuttles of the plurality of shuttles 114 can be connected to truss system 108 such that each shuttle of the first number of shuttles can be connected by one or more link arms of truss system 108, the second number of shuttles (i.e., remaining shuttles) of the plurality of shuttles 114 can be disconnected from truss system 108, and individual shuttles of the plurality of shuttles 114 can push or pull one another by relying only on the connections between the first number of shuttles and truss system 108. As such, in various embodiments, the one or more shuttles 114 and stator unit 104 can be moved about the Y axis (and along the Z axis) to adjust the shape of electric motor 102 to change an existing cabin volume of the electric vehicle.

In various embodiments, the plurality of winding elements 112 can allow electric motor 102 to generate torque in case of a partial loss of windings and to have a reduced number of end windings which can increase an efficiency of cooling and an efficiency of core material usage of electric motor 102. Core material refers to the amount of material in the one or more shuttles 114 that can constitute rotor unit 106 of electric motor 102. The design of electric motor 102 can prevent the need for a large yoke in stator unit 104. As a result, the plurality of winding elements 112 can also be a lighter solution because less yoke or soft magnet material is needed inside electric motor 102 as compared to a traditional electric motor. Further, increasing a number of the plurality of winding elements 112 can generate one or more different electric motor morphologies in the electric vehicle. For example, increasing the number of winding elements 112 in stator unit 104 can increase a periphery of electric motor 102. It is to be appreciated that the number of winding elements 112 (i.e., concentrated winding elements or distributed winding elements) can only be increased while maintaining a phase of electric motor 102. For example, electric motor 102 can be a three-phase motor (i.e., a motor that can receive power from a three-phase current). Then, stator unit 104 can comprise sets of three winding elements 112 coupled together as a chain, wherein each element in a set can respectively correspond to respective ones of the three phases of electric motor 102. As such, the number of winding elements 112 can also be increased in sets of three winding elements 112, wherein each element in a new set can respectively correspond to respective ones of the three phases of electric motor 102. For an electric motor with fewer or additional number of phases (e.g., a two-phase electric motor or a four-phase electric motor), the increment principle/principle to increase the number of winding elements 112 can be consistent with the one described for the three-phase electric motor. The embodiments discussed above are described in greater detail infra with reference to the subsequent figures.

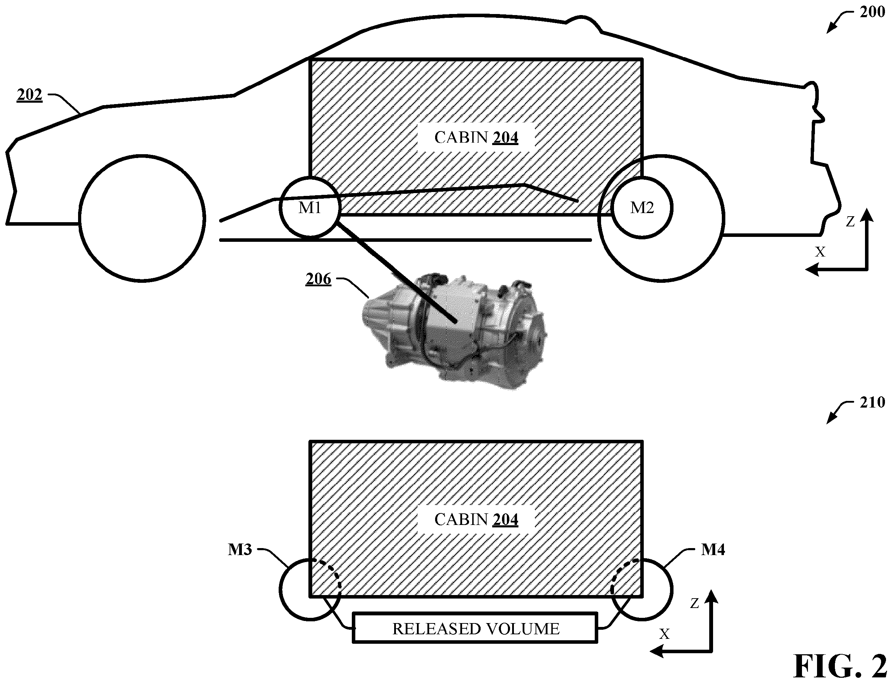

FIG. 2 illustrates block diagrams of example, non-limiting electric motor topologies 200 and 210 in an electric vehicle in accordance with one or more embodiments described herein. Repetitive description of like elements and/or processes employed in respective embodiments is omitted for sake of brevity.

Non-limiting electric motor topology 200 illustrates vehicle 202. Non-limiting electric motor topology 200 can represent an existing topology for placement of electric motors and cabin packaging in an electric vehicle. Vehicle 202 can be an electric car, a hybrid car, or another type of electric or hybrid vehicle. In general, vehicle 202 can be a carrier for goods as well as people. Cabin 204 can represent the cabin volume inside vehicle 202. It is to be appreciated that cabin 204 is merely an exemplary representation of the cabin volume of vehicle 202 and different electric vehicles can have different shapes and sizes of cabin volumes. In non-limiting electric motor topology 200, motor M1 and motor M2 can represent respective electric motors (or rotors of the respective electric motors) employed in vehicle 202. For example, each of motors M1 and M2 can be an XC90 TB twin engine integrated electric drive unit as illustrated at 206. Motors M1 and M2 can be static/inflexible such that they cannot be modified or morphed to become larger or smaller in size. As a result, motors M1 and M2 can occupy some percentage of cabin 204/intrude into cabin 204, which can decrease the cabin volume and cause loss of cabin real estate for the occupants. Employing conventional linear motors in place of the rotors can be inefficient because a conventional linear motor can comprise a much smaller quantity of magnetic material as compared to the quantity of soft magnets that can be employed for flux linkage inside rotors and does not offer the same advantages as those offered by a rotor. Thus, existing electric motor technologies cannot allow the cabin size of an electric vehicle to be adjusted.

Various embodiments of the present disclosure can enable an electric motor to be designed such that the electric motor can circumvent the cabin of an electric vehicle comprising the electric motor. For example, in non-limiting electric motor topology 210, motor M3 and motor M4 can represent electric motors (e.g., such as electric motor 102) designed to circumvent cabin 204 such that employing motors M3 and M4 in place of motors M1 and M2 can release the amount of cabin 204 occupied by motors M1 and M2 and augment the cabin volume for vehicle 202. For example, each of motor M3 and motor M4 can comprise a stator unit (e.g., stator unit 104) comprising a plurality of winding elements (e.g., winding elements 112) coupled together as a chain and a rotor unit (e.g., rotor unit 106) comprising shuttles (e.g., shuttles 114) coupled to the plurality of winding elements. The plurality of winding elements can be concentrated winding elements or distributed winding elements. The arrangement of the shuttles coupled to the plurality of winding elements in each motor can impart to each motor, a shape that can circumvent cabin 204. That is, the design of the adaptable electric motor presented in various embodiments, including the plurality of winding elements and the shuttles can allow for an arbitrary stator form and an arbitrary shape for the electric motor, wherein the arbitrary shape can be a shape that can circumvent the shape of cabin 204. In various embodiments, each of motors M3 and M4 can represent a robust linear motor in principle without having the shape of a conventional linear motor.

Embodiments of the present disclosure can additionally enable a powertrain for electric vehicles, wherein the powertrain can comprise a combination of electric motors and additional propulsion elements. In an embodiment, vehicle 202 can comprise only one electric motor (e.g., motor M3 or motor M4). For example, vehicle 202 can be a vehicle designed for low speed or inexpensive, low-end solutions, wherein only one electric motor can be sufficient to propel vehicle 202. For example, vehicle 202 can be deployed as a concierge service in an airport where vehicle 202 can be expected to mostly operate on smooth pathways and at low speeds. In such situations, vehicle 202 can comprise only one electric motor. In another embodiment, vehicle 202 can comprise multiple electric motors (e.g., motor M3, motor M4, motor M5, etc.). For example, vehicle 202 can be a heavy duty vehicle, wherein additional electric motors can be utilized. In case of multiple electric motors, an even number of electric motors can be desirable to balance the center of gravity of vehicle 202. Further, in various embodiments, each motor of vehicle 202 can comprise one or more shuttles depending on a resonance frequency of vehicle 202, natural frequency of vehicle 202, subframes, etc., wherein the one or more shuttles can be selected from a group consisting of permanent magnet-based shuttles, induction-based shuttles, or reluctance-based shuttles. For example, in one embodiment, each motor of vehicle 202 can comprise only one shuttle, whereas in another embodiment, each motor of vehicle 202 can comprise multiple shuttles (e.g., 5 shuttles, 6 shuttles, 8 shuttles, etc.).

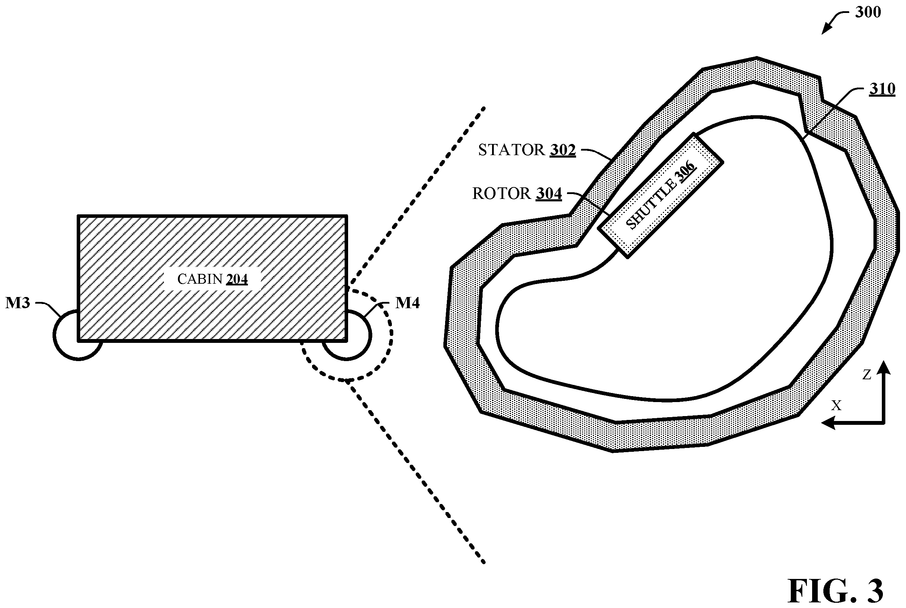

In general, the design of the electric motor presented by the various embodiments herein can allow for a varying number of shuttles to be employed inside the electric motor and a varying number of such electric motors to be employed as a propulsion solution for an electric vehicle, based on mechanical and other design considerations of the electric vehicle. In various embodiments, the electric motors of vehicle 202 can be selected from a group consisting of permanent magnet type electric motors, induction type electric motors or reluctance type electric motors. For example, the shuttles employed inside the electric motors can be permanent magnet-based shuttles, induction-based shuttles, or reluctance-based shuttles, as a result of which the electric motor can be a permanent magnet-based electric motor, induction-based electric motor or a reluctance-based electric motor. As stated elsewhere herein, the number of shuttles (shuttle elements) in respective electric motors of vehicle 202 can be altered at service centers (e.g., based on a request by an operator or vehicle owner of vehicle 202, potential buyer of vehicle 202, authorities, etc.). For example, at some locations, the number of shuttles in the electric motors can be decreased if vehicle 202 is to be operated by an individual under a certain age threshold, to reduce the amount of power available in vehicle 202 due to safety considerations and/or legislation. Additional shuttles can be retrofitted as a sustainable update once the individual crosses the age threshold. The shape of the electric motor described in various embodiments herein is discussed in greater detail with reference to FIG. 3.

FIG. 3 illustrates a diagram of an example, non-limiting electric motor 300 that can circumvent a cabin of an electric vehicle in accordance with one or more embodiments described herein. Repetitive description of like elements and/or processes employed in respective embodiments is omitted for sake of brevity.

Various embodiments of the present disclosure can enable an electric motor to be designed such that the electric motor can circumvent the cabin of an electric vehicle comprising the electric motor. In FIG. 3, non-limiting electric motor 300 (or electric motor 300) is illustrated as a magnified view of motor M4 of FIG. 2; however, it is to be appreciated that electric motor 300 can also represent motor M3 of FIG. 2. In various embodiments, electric motor 300 can comprise stator 302 comprising a plurality of winding elements (i.e., concentrated or distributed winding elements) coupled together as a chain. Electric motor 300 can further comprise rotor 304 comprising shuttle 306 (or one or more shuttles 306) magnetically coupled to the plurality of winding elements and mechanically coupled to a rail structure. The area outlined by the line 310 indicating the trajectory for shuttle 306 can be an empty space. In various embodiments, electric motor 300 can have a shape that can circumvent the shape of cabin 204. For example, employing one or more shuttles 306 coupled to the plurality of winding elements in rotor 304 can allow electric motor 300 to have a shape that can circumvent the shape of cabin 204.

In an embodiment, increasing a number of the plurality of winding elements can generate one or more different morphologies for electric motor 300. Stated differently, chaining together, winding based elementary stator units (i.e., concentrated winding elements or distributed winding elements) can allow different implementation morphologies of electric motor 300. In various embodiments the shuttles and stator 302 can be moved along the Z axis (i.e., an axis perpendicular to the ground surface) in a rotational motion to adjust the shape of electric motor 300, which can allow an existing cabin volume of vehicle 202 to be modified. In general, electric motor 300 can be analogous to electric motor 102. It should be noted that although electric motor 300 is illustrated as having an arbitrary shape, electric motor 300 can have any suitable shape in practice, depending on various factors such as shape and size of vehicle 202, lengths of shuttles comprised in rotor 304, other geometric considerations, etc. For example, the smallest radius of electric motor 300 as measured from the center of the circumference of electric motor 300 cannot be smaller than the length of a shuttle; however, shuttles can be flexible in terms of design and can be designed with appropriate sizes for different implementations. In this regard, electric motor 300 can be deployed in an electric vehicle as a closed manifold or surface.

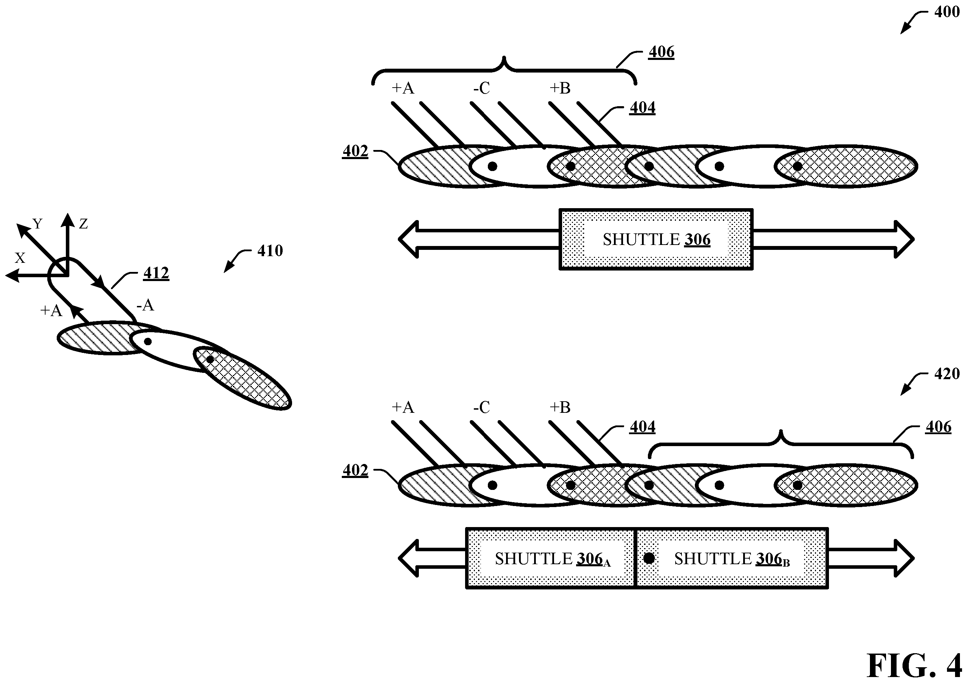

FIG. 4 illustrates diagrams of example, non-limiting sections 400 and 420 of an adaptable electric motor that can circumvent a cabin of an electric vehicle in accordance with one or more embodiments described herein. Repetitive description of like elements and/or processes employed in respective embodiments is omitted for sake of brevity.

With continued reference to FIG. 3, electric motor 300 can comprise stator 302 comprising a plurality of winding elements (i.e., concentrated winding elements or distributed winding elements) coupled together as a chain. Electric motor 300 can further comprise rotor 304 comprising one or more shuttles (e.g., one or more shuttles 306) magnetically coupled to the plurality of winding elements and mechanically coupled to a rail structure, in an arrangement that can impart to electric motor 300, a shape that can circumvent a cabin of an electric vehicle (e.g., vehicle 202).

Non-limiting sections 400 and 420 illustrate concentrated winding elements/arrays (e.g., such as element 402) that can be comprised in stator 302 and shuttles 306 that can be comprised in rotor 304 of electric motor 300. Non-limiting section 400 illustrates an embodiment in which rotor 304 can comprise a single shuttle 306 and non-limiting section 420 illustrates an embodiment in which rotor 304 can comprise multiple shuttles 306 (e.g., shuttle 306_{A}, shuttle 306_{B}, etc.). As discussed in various embodiments, increasing the number of shuttles 306 in rotor 304 can increase torque generated by electric motor 300 due to an increase in the amount of magnetic material in shuttles 306. The number of shuttles can be increased based on usage of electric motor 300 in an electric vehicle, for example, based on propulsion needs of an electric vehicle, availability of space based on the size of the electric vehicle, etc. In this regard, electric motor 300 can be modified by adding or removing concentrated winding elements and/or shuttles based on the type of electric vehicle.

As illustrated in FIG. 4, group 406 of concentrated winding elements can be repeated and coupled together as a chain inside stator 302. Group 406 illustrates three concentrated winding elements, indicating that electric motor 300 can be a three phase motor. For example, +A, -C and +B can represent the three phases for electric motor 300, and the notations +A, -C and +B represent a standard manner of indicating a three phase motor. The three phases can follow each other to create a magnetic field inside stator 302. Shuttle(s) 306 that can be permanent magnet-based shuttles, induction-based shuttles, or reluctance-based shuttles, can be coupled via a flux linkage to the magnetic field in stator 302. Since the flux wave can be a sinusoidal signal, shuttle(z) 306 can follow the contours of stator 302 through the flux linkage to create torque. In other words, stator 302 can turn rotor 304 to excite electric motor 300. In an embodiment, electric motor 300 can also be a two-phase electric motor or other type of motor.

Each concentrated winding element such as element 402 can be a coil. The parallel lines illustrated under the phase notations in FIG. 4 (e.g., at 404) indicate a direction of travel of each coil, which is shown in greater detail at 410. For example, each concentrated winding element can travel in the direction of the Y axis and along the path illustrated by path 412, whereas shuttle(s) 306 can travel along the Z axis and in a rotational motion around the Y axis. The direction of travel of the coil towards the positive Y axis can indicate a positive phase (e.g., +A for element 402) and the direction of travel towards the negative Y axis can indicate a negative phase (e.g., -A). The direction of the Y axis illustrated in FIG. 4 should be interpreted as the positive Y axis travelling out of the plane of the page/along a lateral direction of the electric vehicle and at 90 degrees to the X and the Z axes. Current flowing through each coil can create an electromagnet. Additionally, the size of each concentrated winding element can depend on the circumference of electric motor 300, a class of the electric vehicle for which electric motor 300 can be designed, usage of the electric vehicle, and/or other factors. It is to be appreciated that although FIG. 4 illustrates concentrated winding elements, the embodiments discussed herein can also be applicable to distributed winding elements.

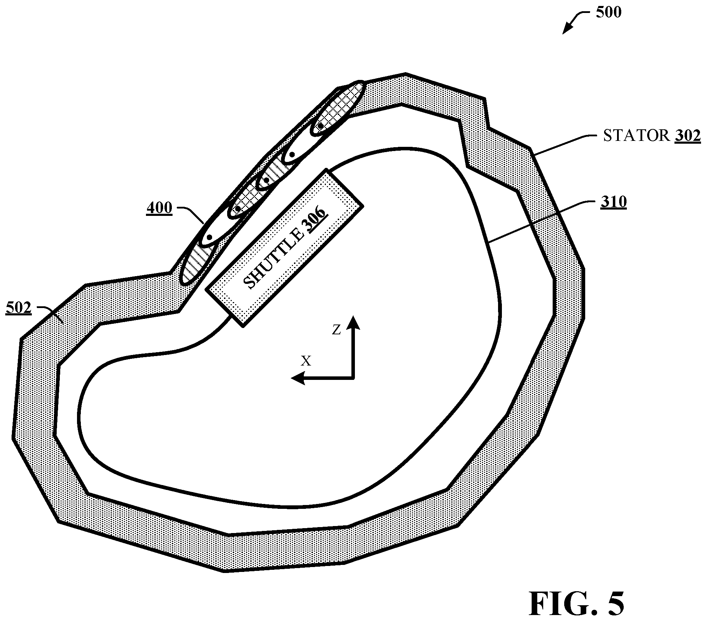

FIG. 5 illustrates a diagram of an example, non-limiting placement 500 of concentrated winding elements in an electric motor in accordance with one or more embodiments described herein. Repetitive description of like elements and/or processes employed in respective embodiments is omitted for sake of brevity.

Non-limiting placement 500 illustrates concentrated winding elements, such as illustrated by non-limiting sections 400 and 410, located in electric motor 300 to form stator 302. Although only a few concentrated winding elements are illustrated in non-limiting placement 500, in electric motor 300, the concentrated winding elements can be located along the entire periphery of stator 302 marked by numeral 502. In various embodiments, distributed winding elements can be similarly located along the periphery of stator 302.

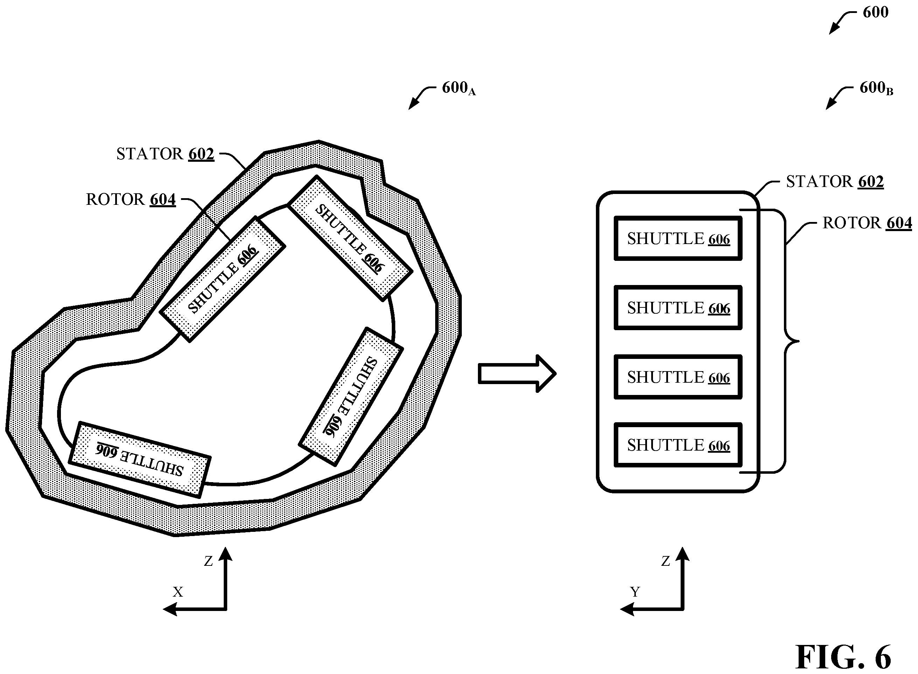

FIG. 6 illustrates diagrams of example, non-limiting views 600_{A} and 600_{B} of shuttles comprised in an adaptable electric motor in accordance with one or more embodiments described herein. Repetitive description of like elements and/or processes employed in respective embodiments is omitted for sake of brevity.

Various embodiments of the present disclosure can enable an electric motor to be designed such that the electric motor can circumvent the cabin of an electric vehicle comprising the electric motor. For example, electric motor 600 can comprise stator 602 comprising a plurality of winding elements (i.e., concentrated winding elements or distributed winding elements) coupled together as a chain. Electric motor 600 can further comprise rotor 604 comprising a plurality of shuttles (e.g., four shuttles 606) magnetically coupled to the plurality of winding elements and mechanically coupled to a rail structure, wherein an arrangement of the plurality of shuttles can impart to electric motor 600, a shape that can circumvent a cabin of an electric vehicle comprising electric motor 600. The plurality of shuttles can be coupled to each other, or the plurality of shuttles can be separate. Electric motor 600 can be analogous to electric motor 102. Non-limiting view 600_{A} illustrates a view of electric motor 600 along the X-Z plane and non-limiting view 600_{B} illustrates a view of electric motor 600 along the Y-Z plane. As evident from non-limiting view 600_{A} and 600_{B}, electric motor 600 can be deployed as a closed surface comprising stator 602 and rotor 304. In this regard, electric motor 600 can be an adaptable linear motor comprising a plurality of winding elements that can constitute stator 602 and shuttles 306 that can constitute rotor 604, wherein electric motor 600 can be modified or adapted to propulsion needs of an electric vehicle by adding or removing the winding elements or shuttles 606.

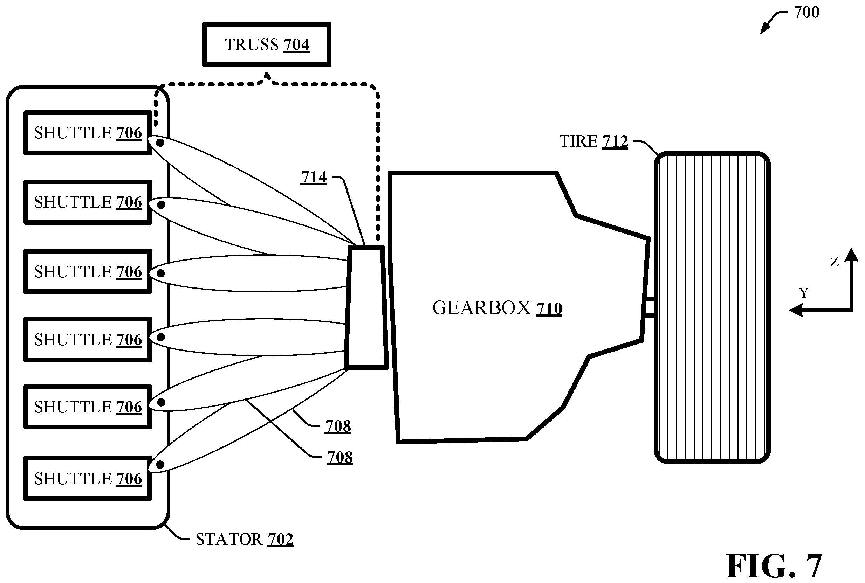

FIG. 7 illustrates a diagram of an example, non-limiting system 700 comprising a truss system coupling an electric motor to a tire via a gearbox in accordance with one or more embodiments described herein. Repetitive description of like elements and/or processes employed in respective embodiments is omitted for sake of brevity.

Various embodiments of the present disclosure can enable an electric motor to be designed such that the electric motor can circumvent the cabin of an electric vehicle comprising the electric motor. For example, non-limiting system 700 (or system 700) can comprise an electric motor. The electric motor can comprise stator 702 comprising a plurality of winding elements (i.e., concentrated winding elements or distributed winding elements) coupled together as a chain. The electric motor can further comprise a plurality of shuttles 706 magnetically coupled to the plurality of winding elements and mechanically coupled to a rail structure, in an arrangement that can impart to the electric motor, a shape that can circumvent a cabin of an electric vehicle comprising the electric motor. The plurality of shuttles 706 can constitute a rotor of the electric motor. The electric motor of system 700 can be analogous to electric motor 102.

In various embodiments, a truss system can connect the electric motor to a wheel (i.e., tire) of the electric vehicle, via a gearbox, to drive the wheel. For example, system 700 can further comprise truss 704, wherein truss 704 can connect the plurality of shuttles 706 to tire 712 via gearbox 710 to drive tire 712 of an electric vehicle comprising system 700. For example, the torque generated by the electric motor can be transmitted to gearbox 710 via truss 704, and gearbox 710 can be coupled to tire 712 such that the torque generated by the electric motor can be utilized to rotate tire 712. In an embodiment, the torque generated by the electric motor can be utilized to rotate multiple tires, for example, in low-speed applications wherein an electric vehicle can be propelled by a single electric motor. In another embodiment, multiple electric motors can be employed to rotate respective tires of an electric vehicle, for example, in larger electric vehicles that can be propelled by multiple electric motors.

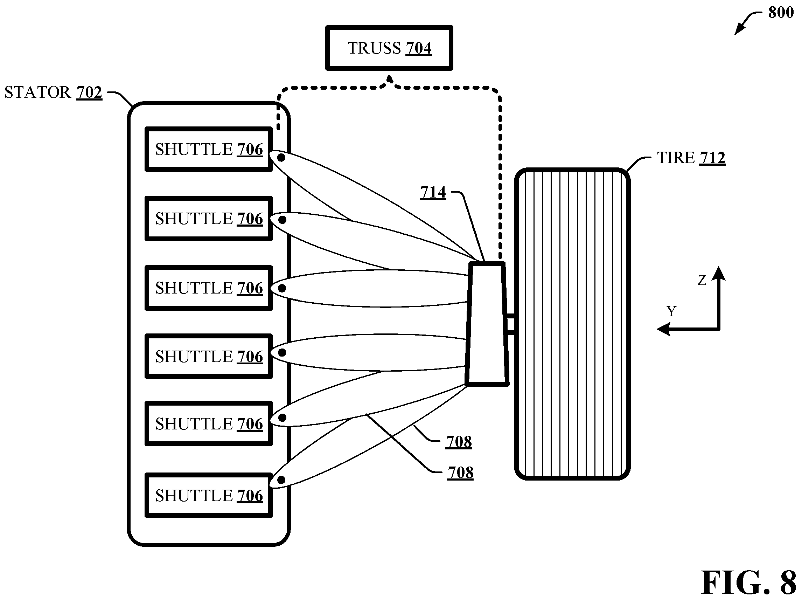

In an embodiment, respective shuttles 706 can be connected to respective link arms 708 of truss 704. In another embodiment, a first number of shuttles 706 can be connected to link arms 708 and a second number of shuttles can be disconnected from truss 704. For example, although system 700 illustrates individual shuttles 706 connected to individual link arms 708, in an embodiment, a first number of shuttles 706 (e.g., four out of six shuttles) can be connected to truss system 108 such that each of the four shuttles can be connected to one or more link arms 708 of truss 704. Further, the remaining shuttles (e.g., two out of six shuttles) can be disconnected from truss 704, and the four shuttles connected to truss 704 can move (e.g., push or pull) all six shuttles 706 of the electric motor. This can reduce the number of link arms 708 needed in the electric motor and consequently reduce the weight of the electric motor. In various embodiments, truss 704 can be designed to have link arms 708 that can be mechanically coupled to a swashplate or hub (e.g., swashplate or hub 714 in FIGs. 7 and 8) via pins towards the side of gearbox 710 and mechanically coupled to shuttles 706 via pins and a rail system. For example, individual link arms 708 can have a rail system that can move around the Y axis (i.e., laterally). Such coupling can allow link arms 708 to move along with shuttles 706. It is to be appreciated that the design of truss 704 described herein is exemplary and truss 704 can have different designs and coupling mechanisms in different scenarios.

In an embodiment, a design of truss 704 can allow an entity (e.g., hardware, software, AI, neural network and/or user) operating an electric vehicle comprising system 700 to modify a cabin size of the electric vehicle during operation of the electric vehicle. For example, the entity can operate the electric car in an autonomous mode enroute to picking up a group of people from a pick-up location. As the electric vehicle nears the pick-up location, the entity can control the positioning of shuttles 706, via controls accessible to the entity, such that the size of stator 702 and thereby the electric motor can be modified to increase the cabin volume of the electric car to accommodate the group of people. In an embodiment, the entity can be a person and the controls to adjust the positioning of shuttles 706 can be accessible to the person inside the cabin of the electric vehicle. For example, the entity can reposition shuttles 706 such that the topmost shuttle 706 can move in a direction towards the front of the electric vehicle and the bottommost shuttle 706 to move in a direction towards the back of the electric vehicle along the X axis, such that shuttles 706 can perform a rotational motion around the Y axis. As described above, truss 704 can be coupled to shuttles 706 via pins and a rail system that can allow truss 704 to accommodate such repositioning of shuttles 706. In this regard, truss 704 can be designed to be functional for various potential movements of shuttles 706 such that the torque generated by the electric motor can continue to be transmitted to gearbox 710 and tire 712 via truss 704 under various positions of shuttles 706.

FIG. 8 illustrates a diagram of an example, non-limiting system 800 comprising a truss system directly coupling an electric motor to a tire in accordance with one or more embodiments described herein. Repetitive description of like elements and/or processes employed in respective embodiments is omitted for sake of brevity.

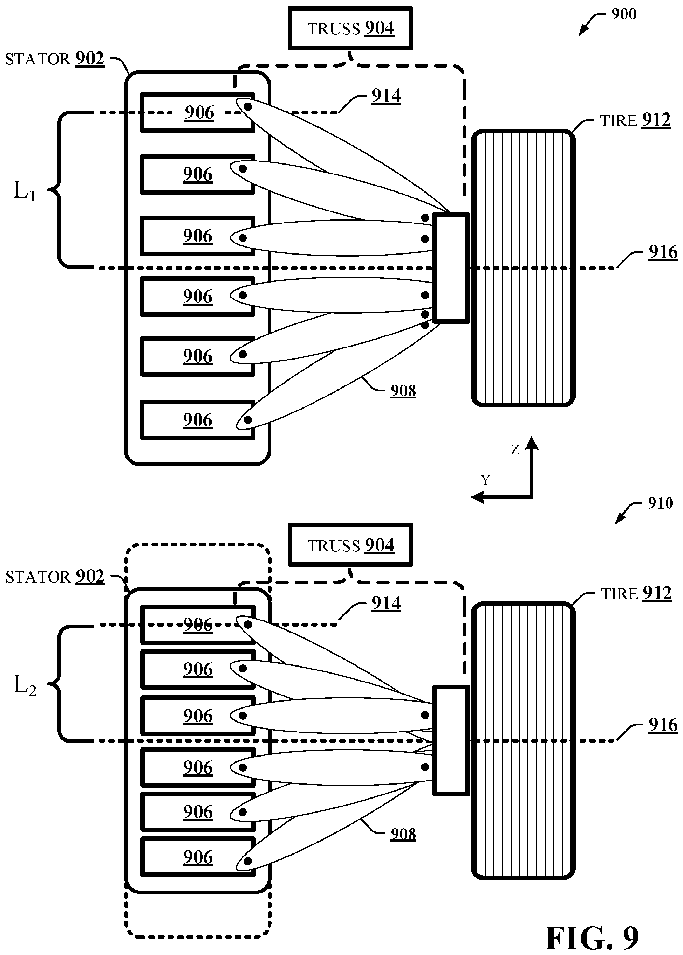

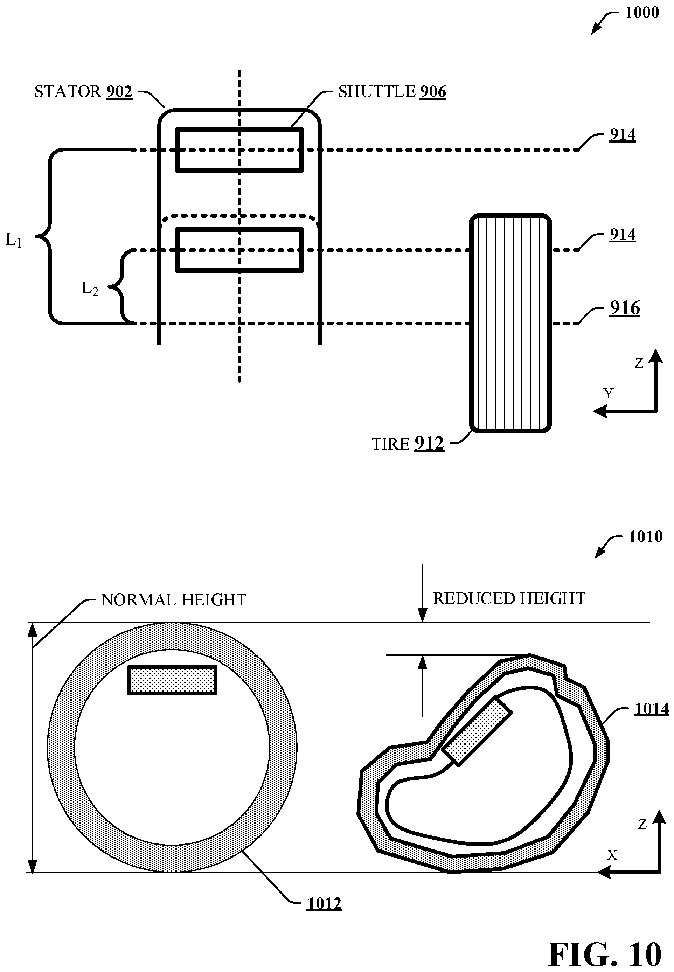

FIG. 8 illustrates an alternate embodiment to the embodiments illustrated in FIG. 7, such that the electric motor comprising stator 702 and shuttles 706 can be coupled to tire 712 directly via truss 704, without a gearbox. In absence of a gearbox, the modification of the chain of stator 902 resulting from repositioning of shuttles 706 can change the moment arm for each shuttle 706, resulting in a change in torque generated by the electric motor and transmitted to tire 712. This concept is discussed in greater detail with reference to FIGs. 9 and 10. In this embodiment, truss 704 can be designed to have the capabilities of a gearbox. Stated differently, truss 704 can be designed to eliminate the need of a gearbox in non-limiting system 800 while maintaining other capabilities of truss 704 described with reference to FIG. 7. In this regard, non-limiting system 800 can be analogous to system 700 without gearbox 710. A gearbox can have significant weight and can result in losses that can manifest in the range of an electric vehicle. Thus, eliminating the gearbox can have performance benefits for an electric vehicle as well as economic benefits.

FIG. 9 illustrates diagrams of example, non-limiting topologies 900 and 910 of an electric motor that can result in different cabin volumes inside an electric vehicle in accordance with one or more embodiments described herein. Repetitive description of like elements and/or processes employed in respective embodiments is omitted for sake of brevity.

Various embodiments of the present disclosure can enable an electric motor to be designed such that the electric motor can circumvent the cabin of an electric vehicle comprising the electric motor. For example, FIG. 9 illustrates an electric motor. The electric motor can comprise stator 902 comprising a plurality of concentrated or distributed winding elements coupled together as a chain. The electric motor can further comprise a plurality of shuttles 906 magnetically coupled to the plurality of concentrated or distributed winding elements and mechanically coupled to a rail structure, in an arrangement that can impart to the electric motor, a shape that can circumvent a cabin of an electric vehicle comprising the electric motor. The plurality of shuttles 906 can constitute a rotor of the electric motor. The electric motor of FIG. 9 can be analogous to electric motor 102. Further, truss 904 can connect the plurality of shuttles 906 to tire 912 of an electric vehicle, via link arms 908, to drive tire 912. The combination of the electric motor, truss 904 and tire 912 can be analogous to non-limiting system 800 and to system 700 with the inclusion of a gearbox between truss 904 and tire 912.

As described in various embodiments, the design of truss 904 can allow an entity (e.g., hardware, software, AI, neural network and/or user) operating the corresponding electric vehicle to modify a cabin size of the electric vehicle during operation of the electric vehicle. For example, the entity can control the positioning of shuttles 906, via controls accessible to the entity inside the cabin of the electric vehicle, such that the size of stator 902 and thereby the electric motor can be modified to increase the cabin volume of the electric vehicle. For example, the entity can reposition shuttles 906 while driving such that the topmost shuttle 906 can move in a direction away from the entity and the bottommost shuttle 906 to move in a direction towards the entity, such that shuttles 906 can perform a rotational motion around the Y axis. Truss 904 can be coupled to shuttles 906 via pins and a rail system that can allow truss 904 to accommodate such repositioning of shuttles 906. In various embodiments, such repositioning of shuttles 906 can cause the respective moment arms for shuttles 906 or a first number of shuttles 906 to also change. For example, upon repositioning shuttles 906, the topology of the electric motor can change from non-limiting topology 900 to non-limiting topology 910, and the distance between line 914 and line 916 can change from L1 to L2, wherein L1 > L2. Line 914 can be an imaginary line passing through the center of the topmost shuttle 906, and line 916 can be an imaginary line passing through the center of stator 902. The moment arm for a shuttle can be equal to the shortest distance between the center of the shuttle and rotational axis/rotational center for the shuttles. For example, for the topmost shuttle 906, the moment arm can be equal to the distance L1 in non-limiting topology 900 and the distance L2 in non-limiting topology 910. Thus, the moment arm for the topmost shuttle 906 can be longer in non-limiting topology 900 than the equivalent moment arm in non-limiting topology 910 (L1 > L2). A longer moment arm can result in a greater torque (*τ*). Thus, if L1 > L2, then τ₁ > *τ*₂, wherein *τ*₁ can be the torque generated by the electric motor given non-limiting topology 900 and *τ*₂ can be the torque generated by the electric motor given non-limiting topology 910. This concept is further illustrated with reference to FIG. 10.

FIG. 10 illustrates example, non-limiting diagrams 1000 and 1010 showing different topologies of an electric motor in accordance with one or more embodiments described herein. Repetitive description of like elements and/or processes employed in respective embodiments is omitted for sake of brevity.

With continued reference to FIG. 9, non-limit diagram 1000 can illustrate different positions for a shuttle 906 that can result in different lengths of a moment and therefore, different torques generated by the corresponding electric motor. For example, since L1 > L2, then τ₁ > *τ*₂, wherein *τ*₁ can be the torque generated by the electric motor corresponding to the position of shuttle 906 at distance L1 from line 916 and *τ*₂ can be the torque generated by the electric motor corresponding to the position of shuttle 906 at distance L2 from line 916. Further, the position of shuttle 906 at distance L1 can indicate a smaller cabin space in the electric vehicle and a lower ground clearance for the electric vehicle, and the position of shuttle 906 at distance L2 can indicate a larger cabin space in the electric vehicle and a higher ground clearance for the electric vehicle. This is further illustrated by non-limiting diagram 1010. At 1012, non-limiting diagram 1010 illustrates the topology for the electric motor corresponding to the position of shuttle 906 at L1. At 1014, non-limiting diagram 1010 illustrates the topology for the electric motor corresponding to the position of shuttle 906 at L2. Evidently, the topology at 1014 can result in a reduced height for stator 902 resulting from a repositioning of shuttles 906 into a more compact structure. The reduced height can release cabin volume previously occupied by the electric motor, resulting in a larger cabin space for occupants or storage. Thus, in various embodiments, a trade-off between cabin volume and torque can be possible based on need.

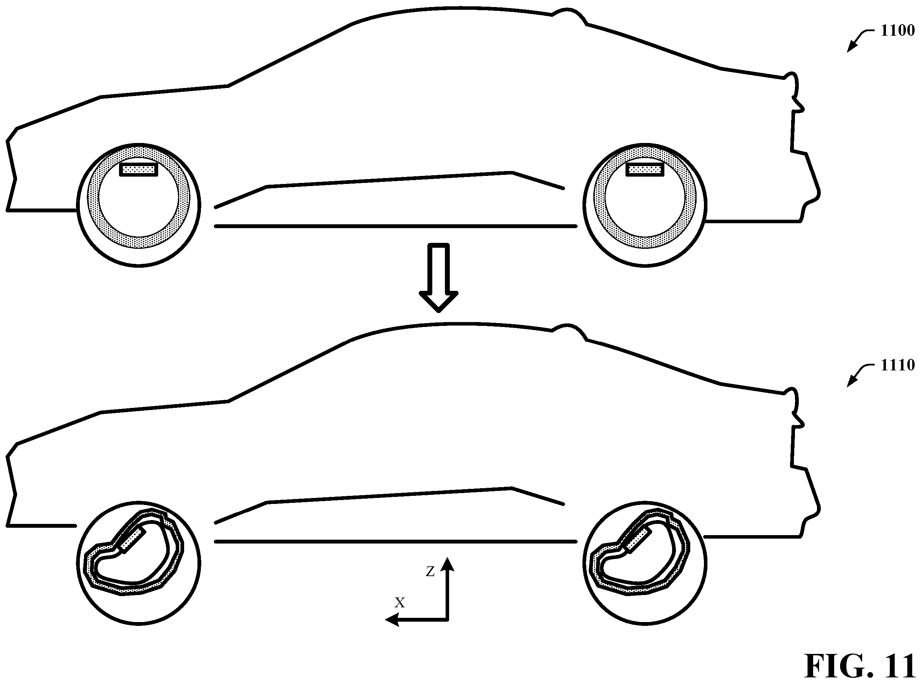

FIG. 11 further illustrates example, non-limiting diagrams 1100 and 1110 showing different topologies of an electric motor with reference to an electric vehicle in accordance with one or more embodiments described herein. Repetitive description of like elements and/or processes employed in respective embodiments is omitted for sake of brevity.

Continuing from the embodiments described with reference to FIGs. 9 and 10, non-limiting diagram 1100 illustrates the topology for the electric motor corresponding to the position of the topmost shuttle 906 at L1, and non-limiting diagram 1110 illustrates the topology for the electric motor corresponding to the position of the topmost shuttle 906 at L2, with reference to an electric car. As evident from the illustrations in FIG. 11, the repositioning of shuttles 906 into a more compact structure can modify the cabin volume of an electric vehicle. Additionally, the repositioning of shuttles 906 can change the curb height/ground clearance (along the Z-axis) for the electric vehicle. For example, non-limiting diagram 1110 illustrates a higher ground clearance than non-limiting diagram 1100. Ground clearance can be defined as the least distance between the lower end of the vehicle body and the ground. Thus, a change in the cabin size can allow the ground clearance to be higher or lower in different scenarios, and the ground clearance can be adjusted when the electric vehicle is being driven. For example, the ground clearance can be kept higher for off-road use of the electric vehicle. This aspect is also illustrated in FIG. 9, in non-limiting topology 910 by the dotted line for stator 902, which dotted line illustrates a difference in the height of stator 902 at non-limiting topology 910 as compared to that at non-limiting topology 900.

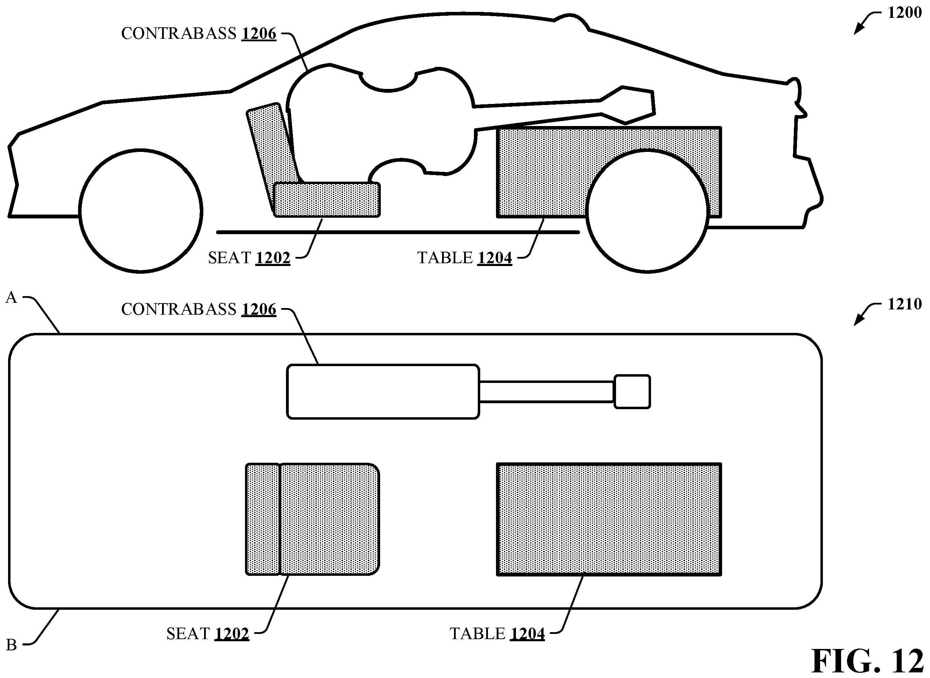

FIG. 12 illustrates example, non-limiting diagrams 1200 and 1210 showing how different topologies of an electric motor can be utilized for a larger cabin volume in an electric vehicle in accordance with one or more embodiments described herein. Repetitive description of like elements and/or processes employed in respective embodiments is omitted for sake of brevity.

With continued reference to FIG. 11, non-limiting diagrams 1200 and 1210 illustrate embodiments wherein the flexible spacing in the electric car resulting from employing the electric motor of the various embodiments herein can be employed to accommodate large items, including a passenger that can occupy seat 1202, table 1204 and contrabass 1206. Seat 1202 can be an adjustable seat that can be rotated such that the passenger can face the back of the electric car when needed. Further, in various embodiments, different electric motors in the electric car (or another electric vehicle) can be adjusted independently, such that the cabin space of the electric car can be altered via a button accessible to an entity (e.g., hardware, software, AI, neural network, machine and/or user) operating the electric car, and the cabin space be shaped independently at different locations of the electric car (e.g., at four corners of the electric car or per the height of the electric car). In this regard, respective electric motors employed in the electric car can be maintained at different heights. Non-limiting diagram 1200 illustrates a side view and non-limiting diagram 1210 illustrates a top view of the electric vehicle. To accommodate contrabass 1206 in the electric vehicle, the electric motors of the electric car at side A illustrated in non-limiting diagram 1210 can be at the lowest possible motor height, the electric motor at side B of the electric car at the corner with seat 1202 for a backward facing passenger can be at a slightly higher motor height than that of the electric motors at side A, and the electric motor at side B of the electric car at the corner with table 1204 be at the highest motor height so that the passenger can work and have lunch at table 1204 (e.g., when the electric vehicle is parked or if the electric vehicle is a self-driving vehicle).

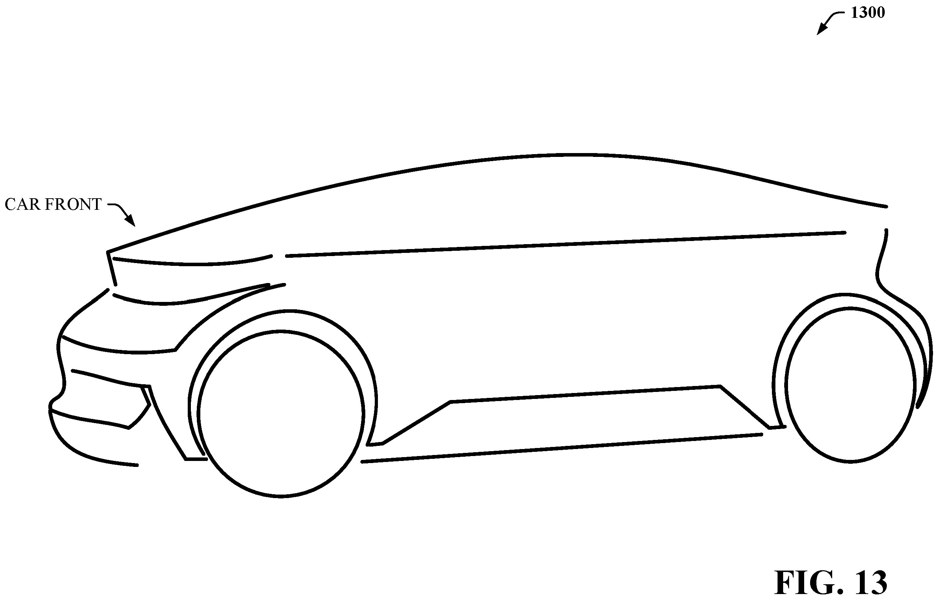

FIG. 13 illustrates an example, non-limiting cab-forward design 1300 for an electric vehicle in accordance with one or more embodiments described herein. Repetitive description of like elements and/or processes employed in respective embodiments is omitted for sake of brevity.

Various embodiments described herein can offer a cab-forward design solution for electric vehicles. Cab-forward implies that instead of designing a vehicle for the motors to be in-line with one another, the vehicle can be designed for the motors to be placed transversally such that hotter components can be put towards the radiator or the inlet of the vehicle. Doing so can result in a larger cab or cabin of the vehicle and a shorter front. An overall short front of the vehicle can provide an aerodynamic advantage, as well. For example, the tires of the vehicle can be closer to the vehicle's bumper, such as illustrates by non-limiting cab-forward design 1300. Such a design can provide aerodynamic advantages, and the lateral distance between tires can be large enough to provide a luxurious lounging experience for occupants of the vehicle, even in smaller cars, for example.

Although the cab-forward technology is well explored for ICEs, cab-forward solutions for BEVs are limited to cylindrical designs for motor casings that are inflexible. In this regard, embodiments of the present disclosure can present efficient solutions that can allow compact electric machines and assist to further increase the size of a cabin at the front and the back of an electric vehicle. In general, embodiments of the present disclosure can provide a flexible motor design for a flexible BEV design, such that a BEV can be designed to be substantially larger for a given vehicle segment.

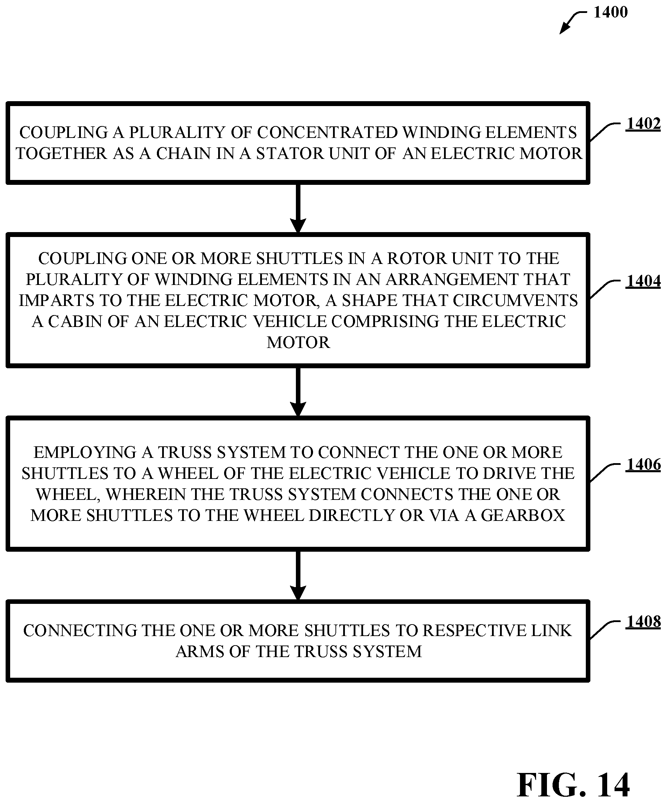

FIG. 14 illustrates a flow diagram of an example, non-limiting method 1400 for developing an adaptable electric motor in accordance with one or more embodiments described herein. Repetitive description of like elements and/or processes employed in respective embodiments is omitted for sake of brevity.

At 1402, the non-limiting method 1400 can comprise coupling a plurality of winding elements together as a chain in a stator unit of an electric motor.

At 1404, the non-limiting method 1400 can comprise coupling one or more shuttles in a rotor unit to the plurality of winding elements in an arrangement that can impart to the electric motor, a shape that can circumvent a cabin of an electric vehicle comprising the electric motor.

At 1406, the non-limiting method 1400 can comprise employing a truss system to connect the one or more shuttles to a wheel of the electric vehicle to drive the wheel, wherein the truss system can connect the one or more shuttles to the wheel directly or via a gearbox.

At 1408, the non-limiting method 1400 can comprise connecting the one or more shuttles to respective link arms of the truss system.

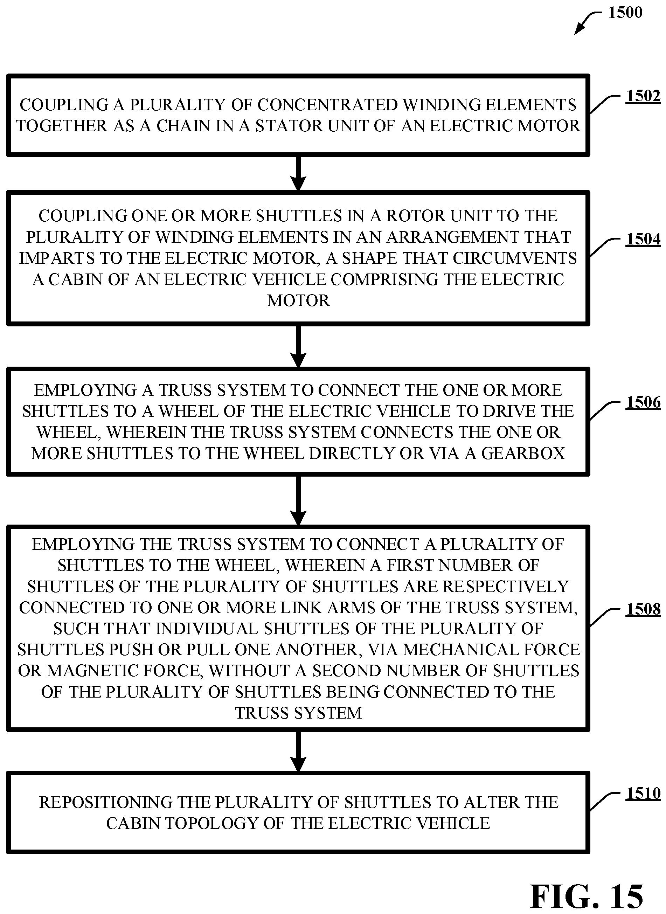

FIG. 15 illustrates a flow diagram of another example, non-limiting method 1500 for developing an adaptable electric motor in accordance with one or more embodiments described herein. Repetitive description of like elements and/or processes employed in respective embodiments is omitted for sake of brevity.

At 1502, the non-limiting method 1500 can comprise coupling a plurality of winding elements together as a chain in a stator unit of an electric motor.

At 1504, the non-limiting method 1500 can comprise coupling one or more shuttles in a rotor unit to the plurality of winding elements in an arrangement that can impart to the electric motor, a shape that can circumvent a cabin of an electric vehicle comprising the electric motor.

At 1506, the non-limiting method 1500 can comprise employing a truss system to connect the one or more shuttles to a wheel of the electric vehicle to drive the wheel, wherein the truss system can connect the one or more shuttles to the wheel directly or via a gearbox.

At 1508, the non-limiting method 1500 can comprise employing the truss system to connect a plurality of shuttles to the wheel, wherein a first number of shuttles of the plurality of shuttles can be respectively connected to one or more link arms of the truss system, such that individual shuttles of the plurality of shuttles can push or pull one another, via mechanical force or magnetic force, without a second number of shuttles of the plurality of shuttles being connected to the truss system.

At 1510, the non-limiting method 1500 can comprise repositioning (e.g., by an entity such as a hardware, software, AI, neural network, machine and/or user) the plurality of shuttles to alter the cabin topology of the electric vehicle (during operation of the vehicle). In some embodiments, altering the cabin topology can involve increasing the cabin volume at the cost of a reduced torque. Alternately, in some embodiments, altering the cabin topology can involve increasing torque at the cost of a reduced cabin volume. The trade-off occurring between the cabin volume and the torque in one or more embodiments herein is explained in greater detail with reference to at least FIG. 9. In one or more embodiments, the flexible topology of the electric motor presented herein can allow the electric motor to be implemented in an electric vehicle as an on-demand accessory, and an entity (e.g., hardware, software, AI, neural network, machine and/or user) operating the electric vehicle can press a button during operation of the electric vehicle to adjust the shape of the electric motor and modify the cabin volume.

For simplicity of explanation, the computer-implemented and/or non-computer-implemented methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the computer-implemented and/or non-computer-implemented methodologies in accordance with the described subject matter.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of various embodiments described herein are provided by the subject matter of the following clauses:
Clause 1: An electric motor, comprising: a stator unit comprising a plurality of winding elements coupled together as a chain; and a rotor unit comprising one or more shuttles coupled to the plurality of winding elements in an arrangement that imparts to the electric motor, a shape that circumvents a cabin of an electric vehicle comprising the electric motor.
Clause 2: The electric motor of any preceding clause, wherein the one or more shuttles are magnetically coupled to the plurality of winding elements and mechanically coupled to a rail structure, and wherein the plurality of winding elements are concentrated winding elements or distributed winding elements.
Clause 3: The electric motor of any preceding clause, wherein the one or more shuttles are selected from a group consisting of permanent magnet-based shuttles, induction-based shuttles, or reluctance-based shuttles, wherein the one or more shuttles are employed as propulsion elements for the electric vehicle, wherein increasing a number of shuttles in the rotor unit increases torque generated by the electric motor, and wherein the electric motor is selected from a group consisting of a permanent magnet motor, an induction motor or a reluctance-based motor.
Clause 4: The electric motor of any preceding clause, wherein a truss system connects the one or more shuttles to a wheel of the electric vehicle, directly or via a gearbox, to drive the wheel.
Clause 5: The electric motor of any preceding clause, wherein the one or more shuttles are connected to respective link arms of the truss system.
Clause 6: The electric motor of any preceding clause, wherein the truss system connects a plurality of shuttles to the wheel, wherein a first number of shuttles of the plurality of shuttles are respectively connected to one or more link arms of the truss system, such that individual shuttles of the plurality of shuttles push or pull one another, via mechanical force or magnetic force, without a second number of shuttles of the plurality of shuttles being connected to the truss system.
Clause 7: The electric motor of any preceding clause, wherein the plurality of winding elements allows the electric motor to generate torque in case of a partial loss of windings and to have a reduced number of end windings which increases an efficiency of cooling and an efficiency of core material usage of the electric motor.
Clause 8: The electric motor of any preceding clause, wherein the one or more shuttles and the stator unit can be moved along an axis perpendicular to a ground surface to adjust the shape of the electric motor and allow the electric motor to change an existing cabin volume or vehicle height of the electric vehicle.
Clause 9: The electric motor of any preceding clause, wherein increasing a number of the plurality of winding elements generates one or more different motor morphologies in the electric vehicle.
Clause 10: The electric motor of clause 1 above with any set of combinations of clauses 2 - 9 above.
Clause 11: A method, comprising: coupling a plurality of winding elements together as a chain in a stator unit of an electric motor; and coupling one or more shuttles in a rotor unit to the plurality of winding elements in an arrangement that imparts to the electric motor, a shape that circumvents a cabin of an electric vehicle comprising the electric motor.
Clause 12: The method of any preceding clause, wherein the one or more shuttles are magnetically coupled to the plurality of winding elements and mechanically coupled to a rail structure, and wherein the plurality of winding elements are concentrated winding elements or distributed winding elements.
Clause 13: The method of any preceding clause, wherein the one or more shuttles are selected from a group consisting of permanent magnet-based shuttles, induction-based shuttles, or reluctance-based shuttles, wherein the one or more shuttles are employed as propulsion elements for the electric vehicle, wherein increasing a number of shuttles in the rotor unit increases torque generated by the electric motor, and wherein the electric motor is selected from a group consisting of a permanent magnet motor, an induction motor or a reluctance-based motor.
Clause 14: The method of any preceding clause, further comprising: employing a truss system to connect the one or more shuttles to a wheel of the electric vehicle to drive the wheel, wherein the truss system connects the one or more shuttles to the wheel directly or via a gearbox.
Clause 15: The method of any preceding clause, further comprising: connecting the one or more shuttles to respective link arms of the truss system.
Clause 16: The method of any preceding clause, further comprising: employing the truss system to connect a plurality of shuttles to the wheel, wherein a first number of shuttles of the plurality of shuttles are respectively connected to one or more link arms of the truss system, such that individual shuttles of the plurality of shuttles push or pull one another, via mechanical force or magnetic force, without a second number of shuttles of the plurality of shuttles being connected to the truss system.
Clause 17: The method of any preceding clause, wherein the plurality of winding elements allows the electric motor to generate torque in case of a partial loss of windings and to have a reduced number of end windings which increases an efficiency of cooling and an efficiency of core material usage of the electric motor.
Clause 18: The method of any preceding clause, wherein the one or more shuttles and the stator unit can be moved along an axis perpendicular to a ground surface to adjust the shape of the electric motor and allow the electric motor to change an existing cabin volume or vehicle height of the electric vehicle.
Clause 19: The method of any preceding clause, wherein increasing a number of shuttles in the rotor unit generates one or more different motor morphologies in the electric vehicle.
Clause 20: The method of clause 11 above with any set of combinations of clauses 12 - 19 above.
Clause 21: An electric vehicle, comprising: at least one electric motor, the at least one electric motor comprising: a stator unit comprising a plurality of winding elements coupled together as a chain; and a rotor unit comprising one or more shuttles coupled to the plurality of winding elements in an arrangement that imparts to the at least one electric motor, a shape that circumvents a cabin of the electric vehicle.
Clause 22: The electric vehicle of any preceding clause, wherein the one or more shuttles are magnetically coupled to the plurality of winding elements and mechanically coupled to a rail structure, and wherein the plurality of winding elements are concentrated winding elements or distributed winding elements.
Clause 23: The electric vehicle of clause 21 above with any set of combinations of clauses 21 and 22 above.

## Claims

1. An electric motor, comprising:
a stator unit comprising a plurality of winding elements coupled together as a chain; and
a rotor unit comprising one or more shuttles coupled to the plurality of winding elements in an arrangement that imparts to the electric motor, a shape that circumvents a cabin of an electric vehicle comprising the electric motor.

2. The electric motor according to claim 1, wherein the one or more shuttles are magnetically coupled to the plurality of winding elements and mechanically coupled to a rail structure, and wherein the plurality of winding elements are concentrated winding elements or distributed winding elements.

3. The electric motor according to claim 1, wherein the one or more shuttles are selected from a group consisting of permanent magnet-based shuttles, induction-based shuttles, or reluctance-based shuttles, wherein the one or more shuttles are employed as propulsion elements for the electric vehicle, wherein increasing a number of shuttles in the rotor unit increases torque generated by the electric motor, and wherein the electric motor is selected from a group consisting of a permanent magnet motor, an induction motor or a reluctance-based motor.

4. The electric motor according to claim 1, wherein a truss system connects the one or more shuttles to a wheel of the electric vehicle, directly or via a gearbox, to drive the wheel.

5. The electric motor according to claim 4, wherein the one or more shuttles are connected to respective link arms of the truss system.

6. The electric motor according to claim 4, wherein the truss system connects a plurality of shuttles to the wheel, wherein a first number of shuttles of the plurality of shuttles are respectively connected to one or more link arms of the truss system, such that individual shuttles of the plurality of shuttles push or pull one another, via mechanical force or magnetic force, without a second number of shuttles of the plurality of shuttles being connected to the truss system.

7. The electric motor according to claim 1, wherein the plurality of winding elements allows the electric motor to generate torque in case of a partial loss of windings and to have a reduced number of end windings which increases an efficiency of cooling and an efficiency of core material usage of the electric motor.

8. The electric motor according to claim 1, wherein the one or more shuttles and the stator unit can be moved along an axis perpendicular to a ground surface to adjust the shape of the electric motor and allow the electric motor to change an existing cabin volume or vehicle height of the electric vehicle.

9. The electric motor according to claim 1, wherein increasing a number of the plurality of winding elements generates one or more different motor morphologies in the electric vehicle.

10. A method, comprising:
coupling a plurality of winding elements together as a chain in a stator unit of an electric motor; and
coupling one or more shuttles in a rotor unit to the plurality of winding elements in an arrangement that imparts to the electric motor, a shape that circumvents a cabin of an electric vehicle comprising the electric motor.

11. The method according to claim 10, wherein the one or more shuttles are magnetically coupled to the plurality of winding elements and mechanically coupled to a rail structure, and wherein the plurality of winding elements are concentrated winding elements or distributed winding elements.

12. The method according to claim 10, wherein the one or more shuttles are selected from a group consisting of permanent magnet-based shuttles, induction-based shuttles, or reluctance-based shuttles, wherein the one or more shuttles are employed as propulsion elements for the electric vehicle, wherein increasing a number of shuttles in the rotor unit increases torque generated by the electric motor, and wherein the electric motor is selected from a group consisting of a permanent magnet motor, an induction motor or a reluctance-based motor.

13. The method according to claim 10, further comprising:
employing a truss system to connect the one or more shuttles to a wheel of the electric vehicle to drive the wheel, wherein the truss system connects the one or more shuttles to the wheel directly or via a gearbox.

14. The method according to claim 13, further comprising:
employing the truss system to connect a plurality of shuttles to the wheel, wherein a first number of shuttles of the plurality of shuttles are respectively connected to one or more link arms of the truss system, such that individual shuttles of the plurality of shuttles push or pull one another, via mechanical force or magnetic force, without a second number of shuttles of the plurality of shuttles being connected to the truss system.

15. An electric vehicle, comprising:
at least one electric motor, the at least one electric motor comprising:
a stator unit comprising a plurality of winding elements coupled together as a chain; and
a rotor unit comprising one or more shuttles coupled to the plurality of winding elements in an arrangement that imparts to the at least one electric motor, a shape that circumvents a cabin of the electric vehicle.
